# EUROPEAN PATENT SPECIFICATION

(11) **EP 1 204 501 B1**
(45) Date of publication and mention of the grant of the patent: **29.06.2005**
(21) Application number: 00928072.8
(22) Date of filing: 26.04.2000
(51) Int. Cl.: B23B 27/16

(54) **A TOOL HOLDER AND A CLAMP PLATE FOR HOLDING A CUTTING INSERT**
WERKZEUGHALTER UND SPANNPLATTE FÜR EINEN SCHNEIDEINSATZ
PORTE-OUTIL ET PLAQUE DE SERRAGE DESTINES A RECEVOIR UNE PLAQUETTE COUPANTE

(30) Priority: 26.04.1999 SE 9901478; 26.04.1999 SE 9901479
(43) Date of publication of application: 15.05.2002
(73) Proprietor: SANDVIK AKTIEBOLAG, 811 81 Sandviken (SE)
(72) Inventor: SJÖÖ, Sture, S-805 92 Gävle (SE); HANSSON, Per, S-805 96 Gävle (SE)
(74) Representative: Taquist, Lennart
(86) International application number: PCT/SE2000/000799
(87) International publication number: WO 2000/064615

(56) References cited:
- GB-A- 1 095 261
- GB-A- 1 210 735
- US-A- 3 268 977
- US-A- 3 731 356
- US-A- 5 820 311

## Description

The present invention relates to a clamp plate for use in a tool holder intended for chipforming machining of metallic workpieces (see e.g. US-A 3 731 356).

There exists a variety of tool holders for the mechanical clamping of cutting inserts such as rhombic, rhomboidic and triangular indexable inserts with equal angles all around the insert. The material used for such inserts is normally cemented carbide material or ceramic material.

A commonly used locking system for such indexable inserts includes a pin in the holder extending upwardly into the insert-receiving pocket to engage a hole in the insert located in said pocket, and means for forcing said pin to be subjected to a pivoting movement inwardly towards said holder. The forcing means is arranged to actuate the lower portion of said pin, thus urging both the pin and the insert inwards towards an upwardly extending wall formed on said holder rearwardly of said pocket. Such type of tool holder is disclosed in U.S. Pat. No. 3,314,126. The drawback of such holder, however, is that the forward nose portion of the cutting insert has a tendency of lifting off the shim plate located underneath said insert which sometimes can lead to insert failure.

It is also common to clamp the insert using a top clamp arm as seen in U.S. Patent No. 3,731,356. However, a front portion of the clamp arm tends to wear too rapidly, especially as a result of being struck by chips created during machining operations.

In view thereof it is an object of the invention to provide a clamp plate for use in a tool holder such that a clamp arm acting on the insert will ensure that the insert is pushed both downwards and inwards. At the same time, it is desirable that a front portion of the clamp acting on the insert can, in the best possible way, be protected against wear from the chips obtained during machining from the workpiece. It is also desirable to provide a clamp plate for use in a tool holder that enables using both solid inserts and centrally apertured inserts in such holder. All these desires can be fulfilled by providing said forcing means in the shape of a clamp arm actuated by a clamping screw which is provided with first and second contact surfaces. The first contact surface is provided on a forward protrusion of said clamp arm, and the second contact surface is provided on a rear protrusion of said clamp arm for engagement with a contact surface that is inclined in relation to the axis of said clamp screw. According to the invention both the upper portion of the clamp screw and the upper portion of a coil spring located between the head and the thread of said screw in a recess of said clamp the central axis of said coil being inclined in relation to the axis of the screw-receiving recess at the same time as said forward protrusion of the clamp is received in a recess of a clamp plate between the insert and the clamp so as to bring said plate into surface abutment with the upper surface of the insert.

The invention will now be described more in detail by reference to the enclosed drawings, which illustrate a preferred embodiment of the invention.
Fig. 1 is a sectional view along the line A-A of a tool holder as shown in Fig. 2 according to one embodiment of the invention.
Fig. 2 is a plan view of a clamp and the insert of the tool holder shown in Fig. 1.
Fig 3 is a longitudinal sectional view of an alternative embodiment of a tool holder of the invention.
Fig 4 is a longitudinal sectional view of the insert of the cutting tool.
Fig. 5 is a longitudinal sectional view along a central line through an alternative embodiment of the invention.
Fig. 6 is a plan view according to Fig. 2 of an insert with a central hole according to Fig. 5.
Fig. 7-9 show a plan view and a perspective view of a clamp plate to be used in this invention.
Fig. 10 is a perspective view and Fig. 13 a plan view of a clamp and an associated clamp plate according to one embodiment of the invention,
and Fig. 12 is a perspective view and 13 a plan view of a clamp and an associated clamp plate according to another embodiment of the invention.

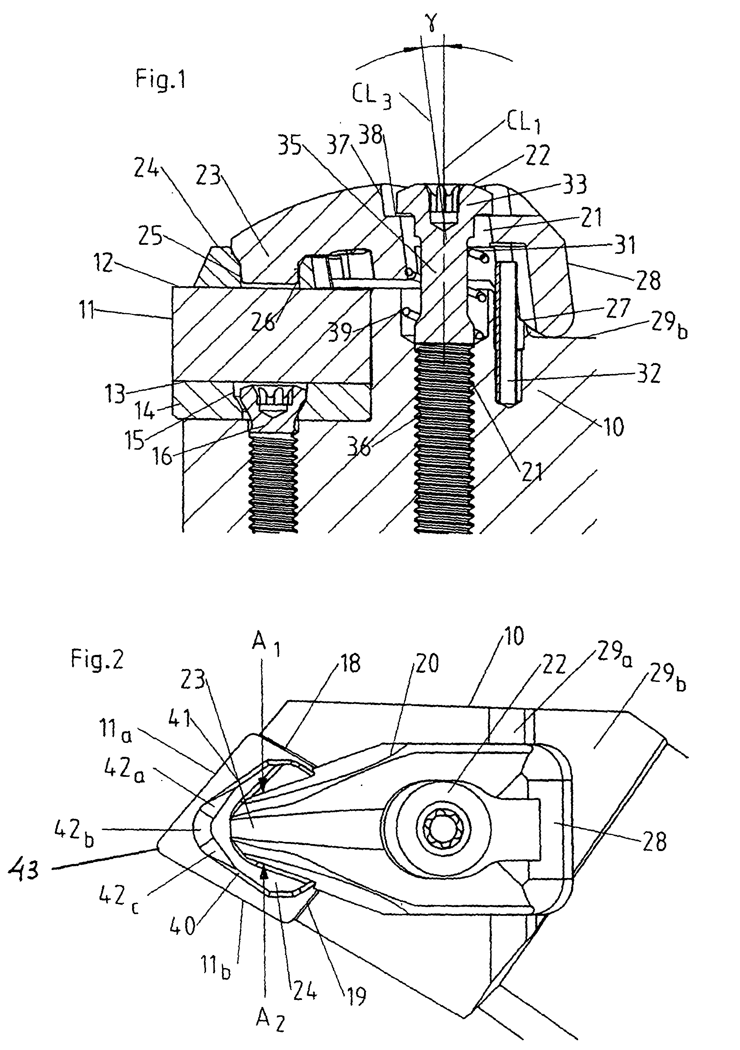

In Figs. 1-2 there is shown a portion of a cutting tool comprising a partially shown tool holder 10 for turning, the forward nose portion of which is provided with a pocket for the receipt of an indexable cutting insert 11 of polygonal shape. This insert has rhombic basic shape and is manufactured from cemented carbide material or ceramic material. The insert has an upper flat surface 12 and a lower flat surface 13 parallel with said upper surface. The insert has a plurality of side surfaces extending perpendicularly towards said upper and lower surfaces 12, 13, two of which are designated 11a and 11b. The insert is arranged to rest in surface abutment with a shim plate 14 having a central hole 15 engaged by a screw 16 that is threadably engaged with the holder 10 the central axis of which extends perpendicularly against the flat surfaces 12,13 of the insert. The insert-receiving site includes a bottom supporting surface 17 and two perpendicularly therefrom-extending support surfaces 18 and 19.

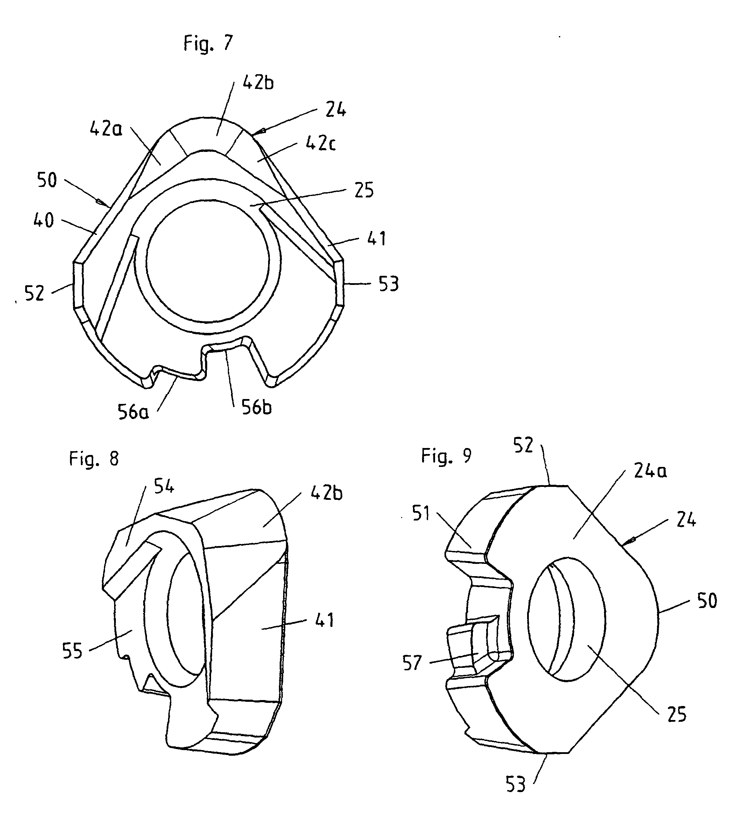

There is a clamp 20 provided for the clamping of the insert into its pocket in the holder 10, said clamp being actuatable by means of a clamp screw 22 that extends entirely through said clamp and threadably engages a bore 21 in the holder 10, the central axis CL₁ of said screw extending parallel with the central axis of the hole 15 in the insert. The forward end of said clamp is in the shape of a downward-inwards inclined first protrusion 23 intended to engage with a separate clamp plate 24 located between said first clamp 20 and said insert 11, said clamp plate 24 having a central hole 25. More specifically, said first protrusion 23 is arranged, upon tightening said screw 22, to be received in said hole 25 thereby extending a pressure downwardly at pressing points A₁ and A₂ (see Fig.2) on the surface 55 (Fig. 8) on each side of said hole 25. The central hole 25 is a recessed bore with rotationally symmetrical configuration, including a lower cylindrical or slightly conical wall which expands upwards by increasing its diameter in the direction from the inner cavity to the entrance opening. The forward mantle surface of the protrusion 23 is given a corresponding configuration. The underneath side 24a of said clamp plate 24 is planar ground and has a large surface extension whilst said hole 25 is straight cylindrical.

This ensures spreading the surface pressure over a large surface of the insert, which is essential, especially in case the insert is manufactured from ceramics.

The opposite part of said clamp 20 is in the shape of a second protrusion 28 which has an inclined surface 27 that is preferably convexly shaped and arranged, upon tightening, to come into surface abutment with a correspondingly inclined surface 29a in the holder 10, inclined at same angle to the central axis CL₁ of said clamp screw 22. At 29b there is designated a lower support surface of the holder 10. The clamp 20 can be tightened by means of the screw that acts against a spring 31 that is partially received in the bore 21 and urges the clamp laterally to an outer position. There is provided a pin 32, acting as stop means, which ensures that the clamp 20 does not rotate upon tightening said screw 22.

The clamp screw 22 has an upper flange-formed head portion 33 integral with an adjacent cylindrical portion 34 with somewhat smaller diameter than said head portion which is integral with a cylindrically shaped waist portion 35 with a smaller diameter than said cylindrical portion 34. The waist portion 35 extends into a lower threaded portion 36 the diameter of which is larger than the diameter of the waist portion 35. Upon tightening, the top surface of the head 33 of the screw becomes essentially flush with the surrounding upper surface or entirely received in a recess 37 of said clamp 20 such that the radial underneath surface of said screw head 33 is located in abutment against a corresponding radially extending surface 38 in the clamp 20 whilst the top surface of said screw head 22 is flush with the top surface of the clamp 20.

In accordance with one aspect of the invention the tool holder is provided with a coil spring 31 around the upper portion of the clamp screw 22, so that the clamp is pressed upwards upon loosening the screw 22. The spring 31 extends axially along the cylindrical waist portion 35 and is partially received in an inclined bore 21 in the clamp 20 and is partially received in a cylindrical recess 39 in the tool holder. More specifically, the central axis CL₃ of said bore 21 extends at an acute angle γ in relation to the central axis CL₁ of said screw 22. In accordance with a suitable embodiment the size of the angle γ is in the range of 2-15°. As appears from Fig. 1 the upper portion of said coil spring 31 is received in said inclined bore 21, the arrangement being such that there is a certain play between said cylindrical portion 34 and the hole wall of said inclined bore 21 such that the clamp does not rotate upon tightening the screw 22 whereas the upper portion of said coil spring 31 is brought into surface contact with the hole wall of said inclined bore 21.

The arrangement is such that upon tightening the screw 22 the lower portion 28 of the end surface of said clamp comes into surface abutment with surface 29a and 29b. It is to be understood that once the clamp portion 28 has come into contact with said surface 29b the clamp will be subjected to a certain rotation movement such that the forward clamp portion 23 establishes a downward pressure towards the insert via the press plate 24 to achieve a firm efficient insert clamping. At the same time it is important to ensure that the lower end surface of said clamp portion 23 is arranged with a certain play in relation to the top surface of the insert as is shown in Fig. 1. By having the forward protrusion 23 of the clamp 20 received in recess 25 of said press plate 24 is also ensured that the upper portion of said protrusion 23 does not become subject to wear under the impact of rearwardly directed chips from the metalworking machining process. This effect is furthermore efficient due to the arrangement that the forward portion of said press plate 24 has a raised portion as compared with the rear portion of said press plate.

As mentioned above the upper portion of coil spring 31 is received in the inclined bore 21 of the clamp whereas the lower portion of said coil spring 31 is partially received in a cylindrical counterbore 39 in said holder 10, the central axis of which is the same as the central axis CL₁. The recess 39 extends to the threaded bore 21, which receives the threaded portion 36 of the clamp screw 22.

The clamp plate 24 of the invention should be made from a material having a larger wear resistance and larger strength than the material of the top clamp 20. The clamp plate 24 should preferably be made of cemented carbide. In a preferred embodiment the thickness of said clamp plate is essentially smaller than the thickness of the cutting insert 11. The forward end surface of said clamp plate 24 is confined by two forwardly converging flat side faces 40 and 41 which are connected by a curved nose portion 42b having a radius of curvature that is essentially larger than the corner radius that is provided at the corner portion 43 of the cutting insert at which corner said converging side faces 11a and 11b of the insert intersect. The forward side faces 40 and 41 of the clamp plate 24 are inclined downwards against the top face of the insert as appears in Fig. 2 and Fig. 7-8. Preferably said side faces 40 and 41 are inclined at an angle that is smaller than corresponding inclined angle of the nose portion 42 which includes a central curved nose portion 42b and side segments 42a and 42c on both sides thereof. These side segments 42a, 42c should preferably be inclined at a larger angle of 20-45° as compared with corresponding angle valid for the segments 40, 41 which lies in the area 5-15°. This accomplishes a more efficient change of the direction of movement of the chip when it approaches the said side segments 42a, 42c.

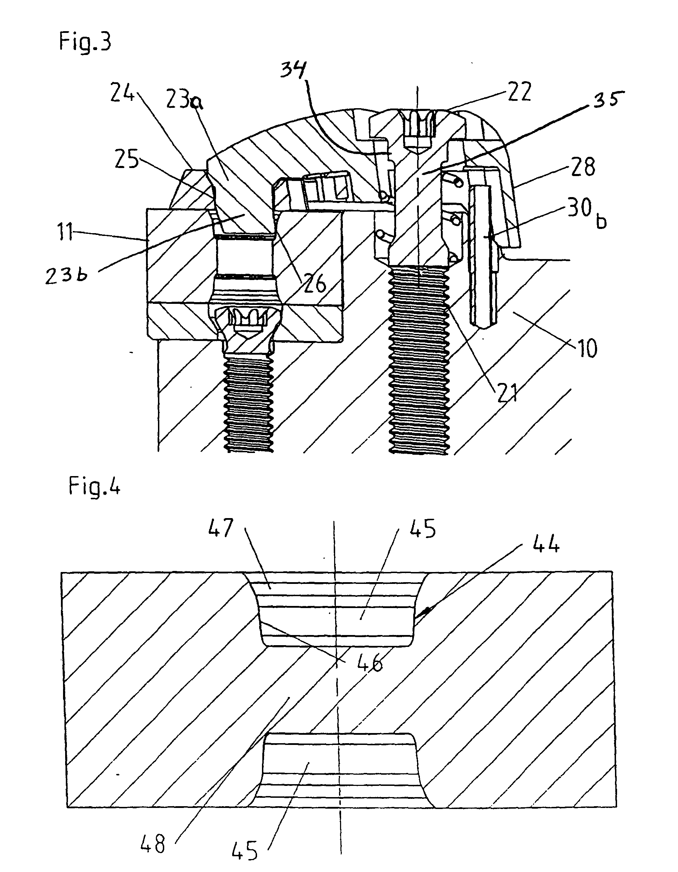

In Fig. 3 is shown an alternative embodiment of the invention. In this case the protrusion 23 is confined by a lower portion 23b that extends downwards-inwards and an upper portion 23a that extends straight downwards. The entire protrusion 23 has a much larger longitudinal extension than compared with the embodiment in Fig. 1-2. More specifically, the protrusion 23 now extends entirely through the central hole 25 of the clamp plate 24 and additionally also extends downwards so as to engage with a recess 44 of the insert 11. The arrangement is such that the lower end portion of said protrusion comes into engagement with the lower portion of the hole wall of said recess 44. The insert 11 has more specifically been provided with a recess 44 of a rotational symmetric form comprising an inner cavity 45 which is delimited by a cylindrical or slightly conical surface 46 and an external cavity 47 which expands outwards by ever increasing its diameter to the entrance opening in the upper top face of the insert. It is to be understood that such inserts having similar cavities with entrances from both the top surface and the bottom surface of the insert could be used in connection with this invention. Such an insert is also shown in Fig. 4. Such an insert is suitably provided with a solid central portion 48 between two opposite cavities as shown in Fig. 4.

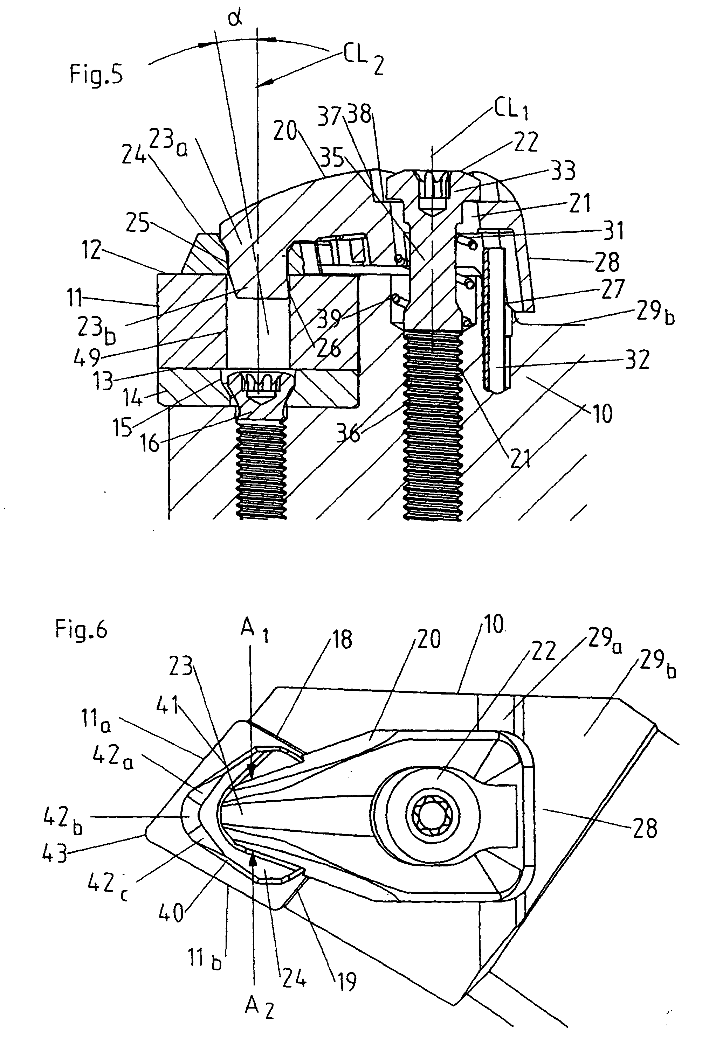

In Fig. 5 is shown an embodiment of the invention wherein the insert 11 has a central through hole 49 with a central axis CL₂ that is parallel with the central axis CL₁ which defines the hole 21 of the holder. In this case the forward protrusion 23 comprises an upper clamp portion 23a that extends straight downwards axially into the insert hole 46 and a lower clamp portion 23b that extends at an inclined angle α downwards-inwards such that the lower clamp portion 23b comes into engagement with the wall of the insert hole 49 at a contact point 26 located a bit downwards in said hole. The forward mantle surface portion of the upper clamp portion 23 and the forward hole wall of said clamp plate 24 is given essentially the same form as in Fig. 1. The inclination angle α ought to have a value in the range 2-15°. As also appears from Fig. 5 there is no surface contact between the lower end portion of the clamp portion 28 and the upper surface of the holder.

When tightening the screw 22 the forward clamp portion 23 will be urged inwards into the insert hole 49. The clamp will thereafter exert a clamping pressure against the clamp plate 24 along the contact zone A₁ and A₂ (also in Fig. 1-2). Upon continued tightening of the screw 22 there will occur a final clamping of the whole system during simultaneous elastic bending of said clamp.

In Fig. 7-9 there is shown some different detailed views of the clamp plate 24. This clamp plate is confined by a forward portion 50 with a wedge-shaped contour towards the forward cutting tip 43 whereas its rear portion is finalized by a convexly curved portion 51. The transition portions between said wedge portion 50 and said rear convex portion consists of two straight portions 52, 53 the edges of which extend parallel to each other. As best seen in Fig. 8 the forward upper surface 54 of the clamp plate 24 is raised in relation to the rear upper surface 55. Preferably these surfaces 54 and 55 are planar and mutually parallel. The forward portion of the clamp 20 is intended to rest against said rear surface 55.

Further, the protrusion 23 extends through recess 25 of the clamp plate 24. Further, said rear convexly curved portion 51 is provided with a non-symmetric recess 56 comprising a first portion 56a and a second portion 56b said first portion 56a having smaller radial depth than the radial depth of said second portion 56b.

Further, said first portion 56a is provided with a shoulder 57, the height level of which corresponds to half the thickness of the clamp plate.

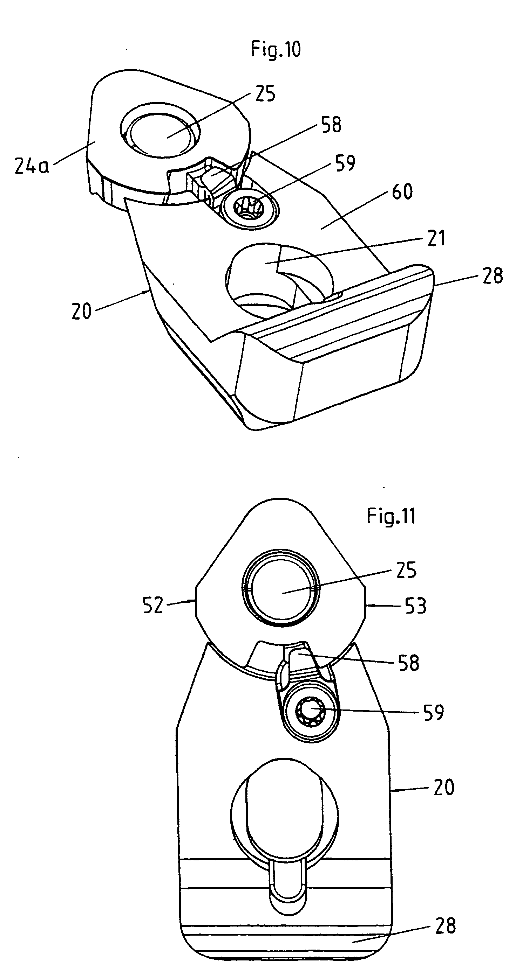

In Fig. 10-11 is shown a perspective view and a plan view of a clamp plate 24 in cooperation with a clamp 20. As shown therein said shoulder 57 is intended to receive a clamp finger 58 that extends from said clamp 20. When mounting occurs this finger 58 is first brought to a free position at the area of portion 56b and then said clamp plate 24 is turned anticlockwise to a position wherein said clamp finger 58 is brought into surface contact with the shoulder 57. This clamp finger 58 is suitably of flat shape and somewhat inclined in relation to the flat contact surface 24a of said clamp plate. This turning of said clamp finger occurs by turning a screw 59 that is threadably engaged into the underneath side of said clamp plate, whereby said screw 59 is threadably engaged such that its head becomes recessed at a lower position than the level of the underneath surface 60 of said clamp 20.

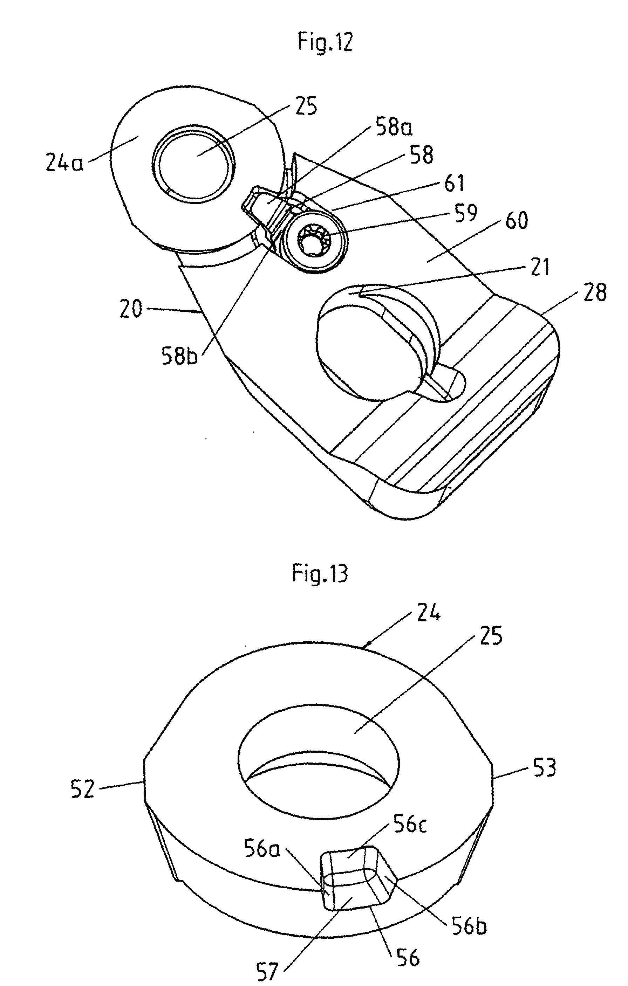

In Fig. 12-13 is shown an alternative embodiment of the clamp plate 24. In this case the rear convex portion 51 of the clamp plate is provided with a singular recess 56 confined by a shoulder 57, the height of which preferably is of a value that corresponds to half the thickness of said clamp plate. Also in this case the clamp finger 58 is a flat metal portion of stepped configuration, comprising an upper portion 58a in contact with said shoulder 57 and a lower portion 58b clamped by a screw 59 into recess 61 of said clamp 20. The clamp finger receiving recess 56 comprises two radially extending side surfaces 56a, 56b and an inner surface 56c extending between said radial surfaces 56a, 56b.

In another alternative embodiment this clamp plate 24 could be provided with a number of cooling channels (not shown) on its underneath side aimed to have a number of cooling streams directed towards the cutting tip whilst being supplied from the interior portion of said holder body 10.

## Claims

1. A clamp plate to be used as pressure means in a tool holder of the kind which includes a holder (10) and an insert (11) located in a recess at the forward end thereof, in which a clamp (20) is provided to clamp the insert by means of a forward protrusion (23) to be engaged with the clamp plate, the clamp plate (24) being confined by a forward wedge-shaped portion (50) and a rear convexly curved portion (51), **characterized in that** the clamp has a forward raised portion (54) and a rear recessed portion (55) which surround a bore (25) for the receipt of the forward protrusion (23) of the clamp (20).

2. A clamp plate as defined in claim 1, **characterized in that** the rear convex portion (51) is provided with mutually opposed side surface portions (52, 53) between the wedge portion (50) and the rear convex portion (51), the side surface portions having planar shape whilst being mutually parallel.

3. A clamp plate as defined in claim 1 or 2, **characterized in that** the rear convex portion (51) is provided with a radially extending recess (56) for the receipt of a blade-shaped clamp finger (58) secured at the underneath side of the clamp (20), the finger being arranged to be secured against a shoulder (57) in the recess (56).

4. A clamp plate as defined in any of claims 1-3, **characterized in that** its front surface comprises two forwardly converging flat side surfaces (40, 41) which are connected by a curved nose portion (42b), the side surfaces (40, 41) being inclined at an angle that is smaller than corresponding inclined angle of the curved nose portion (42b).

5. A clamp plate as defined in any of the claims 1-4, **characterized in that** between the nose portion (42b) and the side surfaces (40, 41) there is provided additional flat side segments (42a, 42c) which are inclined at a larger angle of inclination as compared with the inclination angle valid for the side surfaces (40, 41).

6. A clamp plate as defined in claim 5, **characterized in that** the inclination angle of side segments (42a, 42c) is 20-45°, whereas the inclination angle of side surfaces (40, 41) is 5-15°.

7. A clamp plate as defined in any of the claims 1-5, **characterized in that** it is used in conjunction with an insert (11) of polygonal shape, wherein the forward side surfaces (40, 41) are converging forwardly at an angle that is smaller than the nose point angle between the two edge surfaces (11a, 11b) which converge forwardly towards the cutting tip (43) of the insert.

8. A toolholder with a clamp plate (24) according to claim 1, comprising a tool holder (10) for holding a cutting insert (11) in a pocket confined by a bottom surface and at least one side surface (18) upstanding from the bottom surface, the insert having top and bottom faces (12, 13) and edge faces (11a, 11b) intersecting the top and bottom face, the tool holder comprising a top clamp (20) with forward and rear protrusions (23, 28) mounted on the tool holder for being actuated against the insert by means of a clamping screw (22) extending entirely through the clamp whilst threadably engaging a bore in the tool holder, **characterized in that** the forward end portion (21) of the clamp is in the shape of a protrusion having a contact surface to be engaged with the hole wall of a hole (25) that extends entirely through said clamp plate (24) having a planar underneath contact surface adapted for surface abutment with the top surface (12) of the insert, the cross section of the hole (25) of the clamp plate (24) decreasing downwards towards the insert and the clamp plate being made of a material having a larger hardness and wear resistance than the material of the top clamp (20).

9. A tool holder as defined in claim 8, **characterized in that** the protrusion (23) of the top clamp (20) has basic cylindrical form, the upper portion of which extends straightly downwards through the entire hole (25) of the clamp plate (24) whereas its lower portion (23b) extends downwards-inwards and is brought into contact with the cavity (45) of the insert (11) at a location thereof a bit below the top surface of the insert.

10. A tool holder as defined in claim 8 or 9, **characterized in that** the thickness of the clamp plate (24) is smaller than the thickness of the insert.

11. A tool holder as defined in any of claims 8-10, **characterized in that** the insert (11) has two mutually opposed circular cavities (45) each of which is confined by a cylindrical or slightly conical surface (46) and an external cavity (47) which expands outwards by ever increasing its diameter to the entrance opening in the upper face of the insert.

12. A tool holder as defined in claim 11, **characterized in that** the two opposed cavities (45) are in the form of counterbores with a solid central core portion (48) therebetween.

## Patentansprüche

1. Spannplatte für die Benutzung als Druckmittel in einem Werkzeughalter derjenigen Art, die einen Halter (10) und einen in einer Ausnehmung an seinem Vorderende angeordneten Einsatz (11) einschließt, in dem eine Spanneinrichtung (20) vorgesehen ist, um den Einsatz mittels eines vorwärts gerichteten Vorsprunges (23) einzuspannen, um mit der Spannplatte (24) in Eingriff zu kommen, die durch einen vorwärts gerichteten keilförmigen Abschnitt (50) und einen rückwärtigen, konvex gekrümmten Abschnitt (51) begrenzt ist, **dadurch gekennzeichnet, daß** die Spanneinrichtung einen vorwärts gerichteten erhabenen Abschnitt (24) und einen rückwärtigen, mit Ausnehmung versehenen Abschnitt (55) hat, der eine Bohrung (25) umgibt für die Aufnahme des vorwärts gerichteten Vorsprunges (23) der Spanneinrichtung (20).

2. Spannplatte nach Anspruch 1, **dadurch gekennzeichnet, daß** der rückwärtige konvexe Abschnitt (51) mit gegenseitig gegenüberliegenden Seitenflächenabschnitten (52, 53) zwischen dem Keilabschnitt (50) und dem rückwärtigen konvexen Abschnitt (51) versehen ist, wobei die Seitenflächenabschnitte ebene Form haben, während sie gegenseitig parallel sind.

3. Spannplatte nach Anspruch 1 oder 2, **dadurch gekennzeichnet, daß** der hintere konvexe Abschnitt (51) mit einer sich radial erstreckenden Ausnehmung (56) für die Aufnahme eines blattförmigen Spannfingers (58) versehen ist, der an der Unterseite der Spanneinrichtung (20) befestigt ist, wobei der Finger angeordnet ist, um gegen eine Schulter (57) in der Ausnehmung (56) angebracht zu werden.

4. Spannplatte nach einem der Ansprüche 1 bis 3,**dadurch gekennzeichnet, daß** ihre vordere Oberfläche zwei nach vom konvergierende flache Seitenoberflächen (40, 41) aufweist, welche durch einen gekrümmten Nasenabschnitt (42b) verbunden sind, wobei die Seitenoberflächen (40, 41) unter einem Winkel geneigt sind, der kleiner ist als der entsprechende geneigte Winkel des gekrümmten Nasenabschnittes (42b).

5. Spannplatte nach einem der Ansprüche 1 bis 4, **dadurch gekennzeichnet, daß** zwischen dem Nasenabschnitt (42b) und den Seitenoberflächen (40, 41) zusätzliche flache Seitensegmente (41a, 42c) vorgesehen sind, die schräg unter einem größeren Neigungswinkel verlaufen als im Vergleich mit dem Neigungswinkel, der für die Seitenoberflächen (40, 41) gilt.

6. Spannplatte nach Anspruch 5, **dadurch gekennzeichnet, daß** der Neigungswinkel der Seitensegmente (42a, 42c) 20 bis 45° beträgt, während der Neigungswinkel der Seitenoberflächen (40, 41) 5 - 15° beträgt.

7. Spannplatte nach einem der Ansprüche 1 bis 5, **dadurch gekennzeichnet, daß** sie in Verbindung mit einem Einsatz (11) von polygonaler Gestalt verwendet wird, wobei die vorwärts gerichteten Seitenflächen (40, 41) nach vom unter einem Winkel konvergieren, der kleiner ist als der Nasenspitzenwinkel zwischen den zwei Kantenflächen (11a, 11b), die nach vom zu der Schneidspitze (43) des Einsatzes hin konvergieren.

8. Werkzeughalter mit einer Spannplatte (24) nach Anspruch 1, mit einem Werkzeughalter (10) zum Halten eines Schneideinsatzes (11) in einer Tasche, welche durch eine Bodenfläche und mindestens eine Seitenfläche (18), die von der Bodenfläche hochsteht, begrenzt ist, wobei der Einsatz obere und Bodenflächen (12, 13) und Kantenflächen (11a, 11b) hat, welche die obere und Bodenfläche schneiden, wobei der Werkzeughalter eine obere Spanneinrichtung (20) mit vorwärts gerichteten und rückwärtigen Vorsprüngen (23, 28) aufweist, die auf dem Werkzeughalten angebracht sind, um gegen den Einsatz mittels einer Klemmschraube (22) betätigt zu werden, die sich ganz durch die Spanneinrichtung erstreckt, während sie mit einer Bohrung in dem Werkzeughalter in Gewindeeingriff kommt, **dadurch gekennzeichnet, daß** der vordere Endabschnitt (21) der Spanneinrichtung die Form eines Vorsprunges hat mit einer Kontaktfläche, um mit der Lochwand eines Loches (25) in Eingriff gebracht zu werden, die sich ganz durch die Spannplatte (24) hindurch erstreckt, die eine ebene untere Kontaktfläche hat mit geeigneter Ausgestaltung für den Flächenanschlag mit der oberen Fläche (12) des Einsatzes, wobei der Querschnitt des Loches (25) der Spannplatte (24) nach unten zu dem Einsatz hin abnimmt und die Spannplatte aus einem Material hergestellt ist, welches eine größere Härte und Abriebfestigkeit hat als das Material der oberen Spanneinrichtung (20).

9. Werkzeughalter nach Anspruch 8, **dadurch gekennzeichnet, daß** der Vorsprung (23) der oberen Spanneinrichtung (20) grundsätzlich zylindrische Form hat, deren oberer Abschnitt sich gerade nach unten durch das ganze Loch (25) der Spannplatte (24) erstreckt, während sich ihr unterer Abschnitt (23b) nach unten einwärts erstreckt und in Berührung mit dem Hohlraum (45) des Einsatzes (11) an einem Ort desselben ein wenig unter der oberen Fläche des Einsatzes gebracht ist.

10. Werkzeug nach Anspruch 8 oder 9, **dadurch gekennzeichnet, daß** die Dicke der Spannplatte (24) kleiner als die Dicke des Einsatzes ist.

11. Werkzeughalter nach einem der Ansprüche 8 bis 10, **dadurch gekennzeichnet, daß** der Einsatz (11) zwei gegenseitig gegenüberliegende kreisförmige Hohlräume (45) hat, deren jeder durch eine zylindrische oder etwas konische Fläche (46) und einen äußeren Hohlraum (47) begrenzt ist, der sich nach außen mit immer größer werdendem Durchmesser desselben zu der Eingangsöffnung in der oberen Fläche des Einsatzes ausdehnt.

12. Werkzeughalter nach Anspruch 11, **dadurch gekennzeichnet, daß** die zwei gegenüberliegenden Hohlräume (45) die Form von Senkern mit einem massiven Mittelkemabschnitt (48) dazwischen haben.

## Revendications

1. Plaque de serrage à utiliser comme moyen de pression dans un support d'outil du type qui comprend un support (10) et une plaquette (11) située dans un évidement à l'extrémité avant de celui-ci, dans laquelle un élément de serrage (20) est prévu pour serrer la plaquette au moyen d'une protubérance avant (23) à mettre en prise avec la plaque de serrage, la plaque de serrage (24) étant limitée par une partie en forme de coin avant (50) et une partie arrière incurvée de manière convexe (51), **caractérisée en ce que** l'élément de serrage comporte une partie avant surélevée (54) et une partie arrière en creux (55) qui entourent un alésage (25) de réception de la protubérance avant (23) de l'élément de serrage (20).

2. Plaque de serrage selon la revendication 1, **caractérisée en ce que** la partie arrière convexe (51) est munie de parties de surfaces latérales mutuellement opposées (52, 53) entre la partie de coin (50) et la partie arrière convexe (51), les parties de surfaces latérales ayant une forme plane tout en étant mutuellement parallèles.

3. Plaque de serrage selon la revendication 1 ou 2, **caractérisée en ce que** la partie arrière convexe (51) est munie d'un évidement (56), s'étendant radialement, de réception d'un doigt d'élément de serrage en forme de lame (58) fixé au côté de dessous de l'élément de serrage (20), le doigt étant conçu pour être fixé contre un épaulement (57) dans l'évidement (56).

4. Plaque de serrage selon l'une quelconque des revendications 1 à 3, **caractérisée en ce que** sa surface avant comprend deux surfaces latérales plates convergeant vers l'avant (40, 41) qui sont reliées par une partie de nez incurvée (42b), les surfaces latérales (40, 41) étant inclinées suivant un angle qui est plus petit que l'angle d'inclinaison correspondant de la partie de nez incurvée (42b).

5. Plaque de serrage selon l'une quelconque des revendications 1 à 4, **caractérisée en ce que**, entre la partie de nez (42b) et les surfaces latérales (40, 41), il est prévu des segments latéraux plats supplémentaires (42a, 42c) qui sont inclinés suivant un angle d'inclinaison plus grand que l'angle d'inclinaison valable pour les surfaces latérales (40, 41).

6. Plaque de serrage selon la revendication 5, **caractérisée en ce que** l'angle d'inclinaison des segments latéraux (42a, 42c) est de 20 à 45 degrés, alors que l'angle d'inclinaison des surfaces latérales (40, 41) est de 5 à 15 degrés.

7. Plaque de serrage selon l'une quelconque des revendications 1 à 5, **caractérisée en ce qu'**elle est utilisée en association avec une plaquette (11) de forme polygonale, où les surfaces latérales avant (40, 41) convergent vers l'avant à un angle qui est plus petit que l'angle de pointe du nez entre les deux surfaces d'arête (11a, 11b) qui convergent vers l'avant en direction de l'extrémité de coupe (43) de la plaquette.

8. Support d'outil comportant une plaque de serrage (24) selon la revendication 1, comprenant un support d'outil (10) pour maintenir une plaquette de coupe (11) dans une poche limitée par une surface inférieure et au moins une surface latérale (18) se dressant depuis la surface inférieure, la plaquette ayant des faces supérieure et inférieure (12, 13) et des faces d'arête (11a, 11b) ayant une intersection avec les faces supérieure et inférieure, le support d'outil comprenant un élément de serrage supérieur (20) avec des protubérances avant et arrière (23, 28) montées sur le support d'outil afin d'être actionnées contre la plaquette au moyen d'une vis de serrage (22) s'étendant entièrement au travers de l'élément de serrage tout en se mettant en prise par vissage avec un alésage dans le support d'outil, **caractérisé en ce que** la partie d'extrémité avant (21) de l'élément de serrage est sous la forme d'une protubérance présentant une surface de contact à mettre en contact avec la paroi de trou d'un trou (25) qui s'étend entièrement au travers de ladite plaque de serrage (24), ayant une surface de contact de dessous plane adaptée pour une mise en butée de surface avec la surface supérieure (12) de la plaquette, la section transversale du trou (25) de la plaque de serrage (24) diminuant vers le bas vers la plaquette et la plaque de serrage étant constituée d'un matériau présentant une dureté et une résistance à l'usure plus grandes que le matériau de l'élément de serrage supérieur (20).

9. Support d'outil selon la revendication 8, **caractérisé en ce que** la protubérance (23) de l'élément de serrage supérieur (20) présente une forme cylindrique de base, dont la partie supérieure s'étend directement vers le bas au travers du trou entier (25) de la plaque de serrage (24) alors que sa partie inférieure (23b) s'étend vers le bas vers l'intérieur et est amenée en contact avec la cavité (45) de la plaquette (11) à un emplacement de celle-ci un peu au-dessous de la surface supérieure de la plaquette.

10. Support d'outil selon la revendication 8 ou 9, **caractérisé en ce que** l'épaisseur de la plaque de serrage (24) est plus petite que l'épaisseur de la plaquette.

11. Support d'outil selon l'une quelconque des revendications 8 à 10, **caractérisé en ce que** la plaquette (11) comporte deux cavités circulaires mutuellement opposées (45), dont chacune est limitée par une surface cylindrique ou légèrement conique (46) et une cavité externe (47) qui s'étend vers l'extérieur en augmentant toujours son diamètre vers l'ouverture d'entrée dans la face supérieure de la plaquette.

12. Support d'outil selon la revendication 11, **caractérisé en ce que** les deux cavités opposées (45) sont sous la forme d'alésages borgnes avec une partie de noyau centrale massive (48) entre eux.
